# EUROPÄISCHE PATENTSCHRIFT

(11) **EP 1 051 235 B1**
(45) Veröffentlichungstag und Bekanntmachung des Hinweises auf die Patenterteilung: **05.03.2003**
(21) Anmeldenummer: 99948673.1
(22) Anmeldetag: 23.07.1999
(51) Int. Cl.: B01D 53/90, B01D 53/94, F01N 3/20, B05B 7/00

(54) **VORRICHTUNG ZUM EINBRINGEN EINES REDUKTIONSMITTELS IN EINEN ABGASROHRABSCHNITT EINER BRENNKRAFTMASCHINE**
DEVICE FOR INTRODUCING A REDUCING AGENT INTO A SECTION OF THE EXHAUST PIPE OF AN INTERNAL COMBUSTION ENGINE
DISPOSITIF SERVANT A INTRODUIRE UN MOYEN DE REDUCTION DANS UNE SECTION DE CONDUIT D'ECHAPPEMENT DE MOTEUR A COMBUSTION INTERNE

(30) Priorität: 01.12.1998 DE 19855338
(43) Veröffentlichungstag der Anmeldung: 15.11.2000
(73) Patentinhaber: ROBERT BOSCH GMBH, 70442 Stuttgart (DE)
(72) Erfinder: MAHR, Bernd, D-73207 Plochingen (DE)
(86) Internationale Anmeldenummer: DE9902269
(87) Internationale Veröffentlichungsnummer: WO00032302

(56) Entgegenhaltungen:
- EP-A- 0 381 236
- EP-A- 0 849 443
- EP-A- 0 886 043
- DE-B- 1 148 105
- US-A- 5 431 893
- US-A- 5 603 453

## Beschreibung

Die vorliegende Erfindung betrifft eine Vorrichtung zum Einbringen eines Reduktionsmittels in einen Abgasrohrabschnitt einer Brennkraftmaschine, der zu einem Reduktionskatalysator führt, mit einer in dem Abgasrohr mündenden Reduktionsmittelleitung.

Die immer niedrigeren Schadstoffwerte haben zu umfangreichen Entwicklungen in der Katalysatortechnik geführt, insbesondere um Stickoxide in den Abgasen zu reduzieren. Als besonders erfolgversprechend haben sich Reduktionskatalysatoren gezeigt. Insbesondere bei Dieselmotoren hat es sich jedoch gezeigt, daß in Regenerationsphasen eine Reduktionsmittelanreicherung des Abgases erforderlich ist.

Als Einrichtung zum Nachbenandeln von Abgasen ist beispielhaft aus der EP-A-0 381 236 ein System bekannt, bei dem als Reduktionsmittel ein Ammoniak oder ein Harnstoff dem Abgas zudosiert wird. Bei diesem bekannten System wird das Reduktionsmittel über ein Steuerventil einer Transportleitung zugeführt, die in dem zu dem Reduktionskatalysator führenden Abgasrohr mündet.

Aus der DE-A- 1 196 25 447 ist eine Einrichtung zum Nachbehandeln von Abgasen einer Brennkraftmaschine bekannt, bei der zur Förderung der Wirkungsweise eines nachgeschalteten Reduktionskatalysators Kraftstoff als Reduktionsmittel über ein Dosierventil zugemessen und über eine Verdampfungseinrichtung in das Abgasrohr eingebracht wird. Die Verdampfungseinrichtung ist eine mit einem Glühstift versehene Metallhülse mit einer stirnseitigen Durchtrittsöffnung, über die verdampftes Reduktionsmittel in den Abgasstrom eingeführt wird. Bei diesem System wird zwar thermisch die Verdampfung des Reduktionsmittels unterstützt, jedoch ist diese Lösung technisch kompliziert und erfordert einen hohen Energiebedarf zur Erwärmung und Verdampfung des Reduktionsmittels.

Es ist daher Aufgabe der Erfindung, eine gattungsgemäße Vorrichtung zum Einbringen eines Reduktionsmittels in einen Abgasrohrabschnitt der zuerst genannten Art in solch einer Weise weiterzubilden, daß eine gute Aerosolbildung in einem möglichst großen Kennfeldbereich auftritt, so daß der Gesamtwirkungsgrad des Systems erhöht wird, d.h. daß geringere NOX-Emissionen erreicht werden.

Erfindungsgemäß wird diese Aufgabe durch eine Vorrichtung mit den Merkmalen des Anspruches 1 gelöst. Bevorzugte Ausführungsformen sind in den abhängigen Ansprüchen definiert.

Insbesondere ist bei der erfindungsgemäßen Vorrichtung zum Einbringen eines Reduktionsmittels in einen Abgasrohrabschnitt einer Brennkraftmaschine, der zu einem Reduktionskatalysator führt, mit einer in dem Abgasrohr mündenden Reduktionsmittelleitung, am Mündungsende der Reduktionsmittelleitung ein Sprühkopf angeordnet. Der Sprühkopf weist zumindest eine Sprühöffnung und einen sich verjüngenden Querschnitt auf. Durch die zumindest eine Sprühöffnung läßt sich die Aerosolbildung an Reduktionsmittel drastisch verbessern. Indem der Sprühkopf einen sich verjüngenden Querschnitt aufweist, können auch geringe Mengen an Reduktionsmittel effizient in ein Aerosol verwandelt werden, da der an Reduktionsmittelleitung-Biegungen abreißende Wandfilm, bedingt durch den sich verjüngenden Querschnitt, vor der Sprühöffnung wieder vereint wird. Somit kann eine kontinuierliche Zerstäubung in gesteuerter und kontrollierbarer Weise erzielt werden.

Der Querschnitt des Sprühkopfes verjüngt sich entsprechend einer stetigen monotonen Funktion. Beispielhaft seien hier Parabolfunktionen oder ähnliches angegeben, so daß der Sprühkopf insbesondere eine Art Kugelkalotte bildet.

Vorteilhafterweise verjüngt sich der Querschnitt des Sprühkopfes zumindest linear, wobei insbesondere eine konusartige Kalotte gebildet wird. In diesem Fall sollte die Sprühöffnung an einem Ort angeordnet sein, an dem selbst bei sehr geringer Reduktionsmittelmenge ein geschlossener Wandfilm vorliegt.

Um die Aerosolbildung weiter zu verbessern, bildet die Sprühöffnung bzw. jede Sprühöffnung mit der Achse des Sprühkopfes einen Winkel von zumindest 5°, insbesondere bevorzugt von ca. 50°. Der Winkel der Sprühöffnung bzw. Sprühöffnungen hängt unter anderem von dem gebildeten Sprühkegel, der Größe der Sprühöffnungen, dem Volumendurchsatz der Sprühöffnungen sowie dem Abgasrohrdurchmesser und dem Abgasvolumenstrom ab.

Bei einer bevorzugten Ausführungsform sind mehrere Sprühöffnungen umfangsmäßig verteilt am Sprühkopf vorgesehen. Beispielhaft können acht gleichmäßig bezüglich des Umfangs verteilte Sprühöffnungen vorgesehen sein, so daß die einzelnen Sprühkegel praktisch einen Aerosolnebelring bilden, welcher eine besonders gleichförmige Verteilung des Reduktionsmittels in dem Abgas gewährleistet.

Die Anzahl an Sprühöffnungen, die Anordnung, die Ausrichtung und/oder der Querschnitt der Sprühöffnung bzw. Sprühöffnungen sind abhängig von der Abgasart und/oder -menge sowie dem Abgasrohrdurchmesser. Insbesondere sollte bei einer hohen Abgasgeschwindigkeit das gebildete Aerosol ebenfalls zügig aus dem Sprühkopf ausgegeben werden, um eine optimale Durchmengung zu erreichen, so daß beim Eintritt in den Reduktionskatalysator praktisch ein homogenes Gemisch vorliegt. Durch die Abhängigkeit zwischen Sprühöffnungen und Abgasart und -menge kann eine einfache Adaptation an unterschiedliche Motoren erreicht werden, so daß die erfindungsgemäße Vorrichtung für beliebige Motoren verwendet werden kann, insbesondere für selbstzündende Brennkraftmaschinen, wie Dieselmotoren, selbst wenn diese mit Direkteinspritzung betrieben werden.

Schließlich ist es bevorzugt, daß die Reduktionsmittelleitung mit Druck beaufschlagbar ist. Indem die Reduktionsmittelleitung beispielsweise mittels einer Pumpe beaufschlagbar ist, kann die Austragrate und die Aerosolbildung des Reduktionsmittels weiter verbessert werden, insbesondere wenn durch die Beaufschlagung eine deutliche Druckdifferenz zwischen Reduktionsmittelleitung und Abgasrohrabschnitt besteht.

Weitere Vorteile und Merkmale der Erfindung ergeben sich aus der folgenden detaillierten Beschreibung einer derzeit bevorzugten Ausführungsform unter Bezugnahme auf die beigefügte Zeichnung, die eine Schnittansicht des durch einen Abgasrohrabschnitt mit daran vorgesehener Vorrichtung als bevorzugte Ausführungsform der Erfindung zeigt.

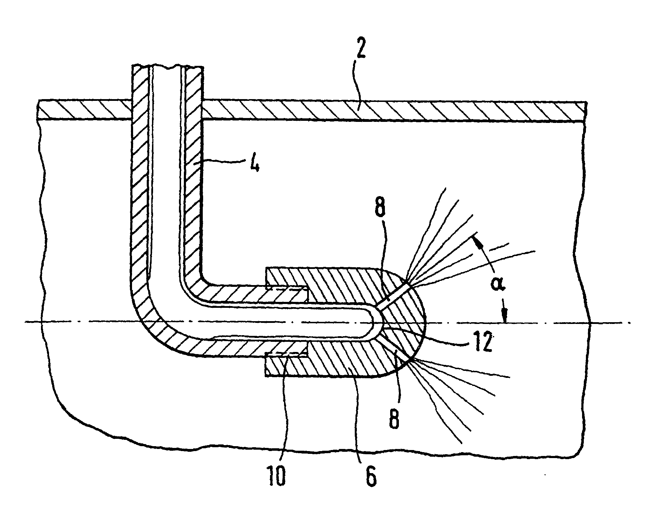

In Fig. 1 ist ein Abgasrohrabschnitt 2 dargestellt, welcher Abgase von einer Brennkraftmaschine zu einem Reduktionskatalysator führt. In dem Abgasrohrabschnitt 2 mündet eine Reduktionsmittelleitung 4, die mit einer Reduktionsmittelzufuhr (nicht dargestellt) verbunden ist. Als Reduktionsmittel kommt neben Kohlenwasserstoffen, z.B. Dieselbrennstoff oder ähnlichem, insbesondere Harnstoff-Wasser-Lösungen in Betracht, die beispielhaft über eine Einspritzdüse, eine Vergasereinrichtung oder andere Dosiereinrichtungen in die Reduktionsmittelleitung eingebracht werden können.

In an sich üblicher Weise bildet die Reduktionsmittelleitung 4 innerhalb des Abgasrohres eine Biegung, da das Reduktionsmittel in der Regel im Bereich höchster Abgasgeschwindigkeit, d.h. im wesentlichen mittig bezüglich des Abgasrohres ausgegeben werden sollte, und in eine Richtung, die zumindest annähernd der Abgasströmung in dem Abgasrohr 2 entspricht. Diese Rohr- oder Leitungsbiegungen führen bei geringen Reduktionsmittelmengen, z.B. Harnstoff-Wasser-Lösung, dazu, daß ein gebildeter Wandfilm an der Reduktionsmittel-Zufuhrleitung abreißt, bedingt durch unterschiedliche Strömungsgeschwindigkeiten in der Reduktionsmittelleitung, insbesondere von Luft, Abgas oder anderem Trägermaterial, mittels welchem das Reduktionsmittel in der Reduktionsmittelleitung 4 angetrieben wird.

Um den abgerissenen Reduktionsmittel-Wandfilm wieder zu vereinen, ist in der gezeigten Ausführungsform am Mündungsende der Reduktionsmittelleitung 4 ein Sprühkopf 6 vorgesehen, der z.B. über ein Gewinde 10 mit der Reduktionsmittelleitung 4 verschraubt sein kann. Es sollte jedoch erwähnt werden, daß auch andere Anschlußmöglichkeiten, z.B. mittels Verklebung, Verlötung oder Preßpassung möglich sind. Die innere Wandung des Sprühkopfes 6 ist zu seinem Ende hin als eine sich verjüngende, z.B. kugelige Fläche 12 ausgebildet, so daß einzelne Bestandteile des abgerissenen Wandfilmes an Harnstoff-Wasser-Lösung dort zusammengeführt und gesammelt werden. Im Bereich der Verjüngung sind in der gezeigten Ausführungsform zwei Sprühöffnungen 8 angedeutet, die bezüglich der Achse des Sprühkopfes einen gewissen Winkel bilden. Der von den Sprühöffnungen 8 bezüglich der Achse gebildete Winkel ist u.a. abhängig von der Abgasströmung, dem Abgasrohrdurchmesser der Reduktionsmittelmenge sowie der Größe und Konfiguration der Sprühörfnungen 8.

Zusammenfassend läßt sich feststellen, daß mit dem erfindungsgemäßen Sprühkopf die Qualität der Aerosolbildung drastisch verbessert wird, so daß der Gesamtwirkungsgrad des Systemes, d.h. die NOX-Reduktion, verbessert wird. Das System kann mittels Parametern bezüglich Anordnung, Größe und Anzahl der Sprühöffnungen und der innenseitigen Verjüngung des Sprühkopfes auf unterschiedlichste Motoren angepaßt werden.

Die verbesserte Qualität der Aerosolbildung wird verständlich, wenn man insbesondere Folgendes bedenkt: Ein Teil eines verwendeten Reduktionsmittels kann in einer Mischkammer beziehungsweise Mischstrecke zerstäubt werden, und es bildet sich außerdem ein Wandfilm. Dieser Wandfilm kann bei kleinen Mengen an Reduktionsmitteln, zum Beispiel Wasser-Harnstoff-Lösung, nach Rohrbiegungen infolge unterschiedlicher Strömungsgeschwindigkeiten der zur Förderung verwendeten Luft abreißen. An der Mündung der Reduktionsmittelleitung würde ohne den erfindungsgemäßen Sprühkopf dieser unvollständige Wandfilm mittels der Druckluft zerstäubt. Dies würde zu einer schwer handzuhabenden und teilweise ungenügenden Zerstäubung oder Aerosolbildung des zudosierten Reduktionsmittels führen.

## Patentansprüche

1. Vorrichtung zum Einbringen eines Reduktionsmittels in einen Abgasrohrabschnitt einer Brennkraftmaschine, der zu einem Reduktionskatalysator führt, mit einer in dem Abgasrohr mündenden Reduktionsmittelleitung, **dadurch gekennzeichnet, daß** der Reduktionsmittelleitung (4) ausserhalb des Abgasrohrs (2) ein gasförmiges Trägermaterial zugeführt wird zum Antreiben des Reduktionsmittels, dass innerhalb des Abgasrohrs am Mündungsende der Reduktionsmittelleitung (4) ein einen sich verjüngenden Querschnitt aufweisender Sprühkopf (6) mit zumindest einer Sprühöffnung angeordnet ist, wobei sich der Querschnitt des Sprühkopfes (6) entsprechend einer stetigen monotonen Funktion verjüngt, und daß die mindestens eine Sprühöffnung (8) mit einer Achse des Sprühkopfes (6) einen Winkel von zumindest 5 Grad bildet, so dass ein abreißender Wandfilm des Reduktionsmittels an der inneren Wandung des Sprühkopfes infolge des sich verjüngenden Querschnitts vor der Sprühöffnung vereint wird und eine kontinuierliche Zerstäubung durch die mindestens eine Sprühöffnung erzielt werden kann.

2. Vorrichtung nach Anspruch 1, **dadurch gekennzeichnet, dass** der Querschnitt des Sprühkopfes (6) eine Kugelkalotte bildet.

3. Vorrichtung nach Anspruch 1 oder 2, **dadurch gekennzeichnet, dass** sich der Querschnitt des Sprühkopfes (6) linear verjüngt, insbesondere eine Konuskalotte bildet.

4. Vorrichtung nach einem der vorhergehenden Ansprüche, **dadurch gekennzeichnet, dass** der Winkel 50 Grad beträgt.

5. Vorrichtung nach einem der vorhergehenden Ansprüche, **dadurch gekennzeichnet, dass** mehrere Sprühöffnungen (8) umfangsmässig verteilt am Sprühkopf (6) vorgesehen sind.

6. Vorrichtung nach einem der vorhergehenden Ansprüche, **dadurch gekennzeichnet, dass** die Reduktionsmittelleitung (4) mit Druck beaufschlagbar ist.

## Claims

1. Device for introducing a reducing agent into an internal-combustion engine exhaust pipe section which leads to a reduction catalytic converter, having a reducing-agent line which opens out into the exhaust pipe, **characterized in that** outside the exhaust pipe (2) a gaseous carrier material is fed to the reducing-agent line (4) in order to drive the reducing agent, **in that** a spray head (6), which has a tapering cross section and at least one spray opening, is arranged inside the exhaust pipe at the opening end of the reducing-agent line (4), the cross section of the spray head (6) tapering according to a continuous, monotone function, and **in that** the at least one spray opening (8) forms an angle of at least 5 degrees with an axis of the spray head (6), so that a wall film of the reducing agent which breaks off on the inner wall of the spray head is combined upstream of the spray opening, on account of the tapering cross section, and continuous atomization can be achieved through the at least one spray opening.

2. Device according to Claim 1, **characterized in that** the cross section of the spray head (6) forms a spherical cap.

3. Device according to Claim 1 or 2, **characterized in that** the cross section of the spray head (6) tapers linearly, and in particular forms a conical cap.

4. Device according to one of the preceding claims, **characterized in that** the angle is 50 degrees.

5. Device according to one of the preceding claims, **characterized in that** a plurality of spray openings (8) are distributed over the circumference of the spray head (6).

6. Device according to one of the preceding claims, **characterized in that** pressure can be applied to the reducing-agent line (4).

## Revendications

1. Dispositif pour introduire un agent réducteur dans un segment de conduite de gaz d'échappement d'un moteur à combustion interne relié à un catalyseur réducteur, comprenant une conduite d'agents réducteurs débouchant dans la conduite de gaz d'échappement,
**caractérisé en ce que**
la conduite d'agents réducteurs (4) reçoit en dehors de la conduite de gaz d'échappement (2), un produit gazeux, formant un vecteur, pour entraîner l'agent réducteur de façon qu'à l'intérieur de la conduite de gaz d'échappement, à l'extrémité d'embouchures de la conduite d'agents réducteurs (4), il est prévu une tête de pulvérisation (6) ayant une section allant en diminuant, avec au moins un orifice de pulvérisation ;
la section de la tête de pulvérisation (6) allant en diminuant selon une fonction monotone continue ; et
au moins un orifice de pulvérisation (8) forme avec un axe de la tête de pulvérisation (6) un angle d'au moins 5° pour qu'un film de paroi de l'agent réducteur, qui décroche, se réunit au niveau de la paroi intérieure de la tête de pulvérisation du fait de la section allant en diminuant, en amont de l'orifice de pulvérisation et permette une pulvérisation continue par au moins un orifice de pulvérisation.

2. Dispositif selon la revendication 1,
**caractérisé en ce que**
la section de la tête de pulvérisation (6) forme une calotte sphérique.

3. Dispositif selon la revendication 1 ou 2,
**caractérisé en ce que**
la section de la tête de pulvérisation (6) diminue de manière linéaire notamment en formant une calotte conique.

4. Dispositif selon l'une des revendications précédentes,
**caractérisé en ce que**
l'angle est de 50°.

5. Dispositif selon l'une des revendications précédentes,
**caractérisé par**
plusieurs orifices de pulvérisation (8) répartis à la périphérie de la tête de pulvérisation (6).

6. Dispositif selon l'une quelconque des revendications précédentes,
**caractérisé en ce que**
la conduite d'agents réducteurs (4) est alimentée en pression.
